# EUROPÄISCHE PATENTANMELDUNG

(11) **EP 0 916 519 A1**
(43) Veröffentlichungstag der Anmeldung: **19.05.1999**
(21) Anmeldenummer: 98121062.8
(22) Anmeldetag: 06.11.1998
(51) Int. Cl.: B42D 15/10

(54) **Transportable Karteneinheit**

(30) Priorität: 11.11.1997 DE 19749755
(71) Anmelder: Meiller Comcard GmbH, 08223 Falkenstein (DE)
(72) Erfinder: Morgenstern, Michael, 08485 Lengenfeld (DE)
(74) Vertreter: Tergau & Pohl Patentanwälte

(57) **Zusammenfassung**

Eine transportable Karteneinheit (1) weist einen kartenförmigen Grundkörper (2) mit einem optisch transparenten Durchgang (3,7,10) auf. Am Durchgang (3,7,10) ist ein Element (4,4') angeordnet, welches zumindest für einen Teil des auftreffenden Lichtes optisch transparent ist. Dieses Element (4,4') weist eine das hindurchtretende Licht beeinflussende Eigenschaft auf.

## Beschreibung

Die Erfindung betrifft eine transportable Karteneinheit. Derartige Karteneinheiten bestehen beispielsweise aus Kunststoff oder Hartpapier und sind insbesondere im Scheckkartenformat ausgebildet. Die vorbekannten Karteneinheiten dienen unterschiedlichen Funktionen und sind hierzu beispielsweise als Kreditkarte, Scheckkarte, Visitenkarte oder Telefonkarte ausgebildet.

Der Erfindung liegt die Aufgabe zugrunde, eine transportable Karteneinheit mit einer neuen technischen Funktion auszustatten.

Diese Aufgabe wird durch die Merkmalskombination des Anspruches 1 gelöst. Erfindungsgemäß weist die Karteneinheit einen kartenförmigen Trägerkörper auf. Dieser Trägerkörper enthält einen optisch transparenten Durchgang und trägt ein in diesem Durchgang angeordnetes optisch transparentes Element. Der Durchgang und das Element sind derart zueinander angeordnet, daß Lichtstrahlung über den Durchgang und das Element durch die Karteneinheit hindurchtreten kann. Die Durchgangsrichtung der Lichtstrahlung ist üblicherweise quer zur Kartenebene, d. h. quer zur Querschnittsebene des Elementes angeordnet. Das Element ist zumindest für einen Teil des auf das Element auftreffenden Lichtes optisch transparent und weist eine Eigenschaft auf, welche das durch das Element hindurchtretende Licht beeinflußt oder verändert. Auf diese Weise enthält die Karteneinheit ein sogenanntes Sichtfenster, welches hindurchtretendes Licht durch einen optischen Vorgang beeinflußt oder verändert. Diese Veränderungen des auftreffenden Lichtes ermöglichen es, Informationen von einem Informationssträger (z.B. Papier mit besonderem Druck, Gutscheine, Losblätter, Kataloge) insbesondere für das menschliche Auge identifizierbar, d.h. sichtbar oder lesbar zu machen. Hierbei sind die vorgenannten Informationen auf dem Informationsträger in einer für das menschliche Auge nicht identifizierbaren Form vorhanden. Die von den Informationen im für das menschliche Auge sichtbaren Spektralbereich emittierte Lichtstrahlung (entweder selbstleuchtende Informationen oder an nichtleuchtenden Informationen reflektierte Lichtstrahlung) trifft auf das ebenfalls im für das menschliche Auge sichtbaren Spektralbereich optisch transparente Element auf und wird über dieses Element gewissermaßen in für das menschliche Auge identifizierbare Lichtstrahlung oder Symbole (z.B. Buchstaben, Zahlen, Figuren) 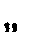 umgewandelt". Die Karteneinheit wirkt gewissermaßen als 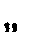 optischer Wandler".

Je nach technischem Anwendungsfall kann das optisch transparente Element unterschiedlich ausgestaltet sein. Das optisch transparente Element ist beispielsweise als Spalt, Doppelspalt, Prisma, Linse, Gitter bzw. Beugungsgitter, Farbfilter o.dgl. ausgebildet. In einem einzigen transparenten Element können auch mehrere der vorgenannten technischen Ausgestaltungen kombiniert sein. Die Ausgestaltung des optisch transparenten Elementes richtet sich nach der gewünschten Beeinflussung der durch das optisch transparente Element hindurchtretenden Lichtstrahlung. Beispielsweise erfährt die Lichtstrahlung am optisch transparenten Element zumindest teilweise eine Beugung, Interferenz, Reflexion, Absorption, Brechung, bevor sie zum menschlichen Auge gelangt.

Vorteilhaft ist es, wenn mehrere optisch transparente Elemente in Durchgangsrichtung der auftreffenden Lichtstrahlung aneinandergereiht sind, da hierdurch eine Beeinflussung der durch die Karteneinheit hindurchtretenden Lichtstrahlung mit einer größeren Anzahl von optischen Vorgängen technisch einfach möglich ist.

Das optisch transparente Element ist insbesondere farbig homogen (rot, grün, blau, etc.) als Farbfilter ausgestaltet. In einer weiteren Ausführungsform ist das transparente Element mit einer Gitterstruktur und/oder einer Beugungsstruktur ausgestattet. Für bestimmte Anwendungsfälle ist es von Vorteil, mehrere Farbfiltern vorzusehen, wobei sich diese Farbfilter zumindest teilweise überdecken können. Diese Farbfilter können durch ein einziges optisch transparentes Element oder durch mehrere optische transparente Elemente mit jeweils einem Farbfilter realisiert sein.

Die erfindungsgemäße Karteneinheit wird z.B. bei Glücks-, Rate- oder Lotteriespielen verwendet, um z.B. auf Informationsträgern abgedruckte Lösungswörter dem Betrachter erst mit Hilfe der Karteneinheit bzw. des optisch transparenten Elements identifizierbar zu machen. In bestimmten Anwendungsfällen ist es von Vorteil, die Karteneinheit in Kombination mit einer automatischen Verarbeitungseinheit einzusetzen, welche die von Informationen emittierten Lichtstrahlen mittels eines lichtsensitiven Detektors automatisch verarbeitet. Hierbei wird zwischen den Informationen und dem lichtsensitiven Detektor das optisch transparente Element positioniert.

Der kartenförmige Trägerkörper bietet dem Inhaber der Karteneinheit eine bequeme und sichere Möglichkeit, das optisch transparente Element zu transportieren und mechanisch gut geschützt aufzubewahren. Der Querschnitt des optisch transparenten Durchgangs und/oder des Elements ist insbesondere kreisrund. Ovale, polygonförmige und andere Querschnittsformen sind jedoch ebenfalls denkbar und können den ästhetischen Gesamteindruck der Karteneinheit verbessern.

In einer vorzugsweisen Ausgestaltung besteht der Trägerkörper oder - im Falle eines mehrschichtigen Aufbaus - dessen Schichten aus Kunststoff. Hierdurch ist die Karteneinheit besonders kostengünstig herstellbar und aufgrund ihrer beschädigungsunanfälligen Handhabung besonders langlebig.

Der Beschädigungsschutz des Trägerkörpers und des optisch transparenten Elementes wird dadurch verbessert, daß der Trägerkörper in einer bevorzugten Ausführungsform zumindest teilweise von einer optisch transparenten Außenschicht umgeben, insbesondere allseitig ummantelt ist. Diese Außenschicht bildet einen mechanisch stabilen Schutzfilm für die Karteneinheit und gewährleistet gleichzeitig aufgrund ihrer Durchsichtigkeit die beabsichtigte Wirkung des optisch transparenten Elementes.

In einer bevorzugten Ausführungsform hat die Karteneinheit eine zusätzliche Funktion als Werbe- oder Informationsträger. Hierbei trägt die Oberfläche des Trägerkörpers und/oder der Außenschicht bestimmte Informationseinheiten.

Vorzugsweise ist der Trägerkörper im Scheckkartenformat bzw. im Standard-ISO-Format (85,6 x 54,0 mm²) ausgebildet, wodurch die Handhabung der Karteneinheit und deren Aufbewahrung in gebräuchlichen Etuis vereinfacht ist. Dabei kann die Aufbauhöhe des Trägerkörpers je nach Ausführungsform unterschiedlich sein.

Zur Herstellung der Karteneinheit werden vorzugsweise übliche Fertigungstechnologien verwendet. Beispielsweise wird die mehrschichtige Karteneinheit durch Kleben oder Laminieren der einzelnen Schichten hergestellt.

Das optisch transparente Element läßt sich auch in Karteneinheiten mit anderen Funktionen (z.B. Ausweis, Visitenkarte, Kreditkarte o.dgl.) integrieren. Hierdurch erhalten vorbekannte Karteneinheiten eine zusätzliche technische Funktion als optischer 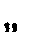 Wandler".

Um eine gute mechanische Stabilität der Karteneinheit zu erzielen, ist der Trägerkörper vorzugsweise mehrschichtig aufgebaut. Die einzelnen Schichten können aus demselben Werkstoff (z.B. Metall, Papier, Pappe, Kunststoff) oder auch aus unterschiedlichen Werkstoffen bestehen. Die Schichtstärken der demselben Trägerkörper zugeordneten Schichten können identisch oder unterschiedlich sein.

Vorzugsweise ist der Trägerkörper von einer als optisch transparenter Durchgang wirksamen Durchgangsöffnung, einer Perforation o.dgl. für das optisch transparente Element durchsetzt. Im Falle eines mehrschichtigen Aufbaus des Trägerkörpers ist zumindest eine nichttransparente Schicht des Trägerkörpers von einer Durchgangsöffnung durchsetzt oder weist eine schichtfreie Zone auf, um einen optisch transparenten Durchgang für das optisch transparente Element zu gewährleisten.

Vorzugsweise sind mehrere Schichten des Trägerkörpers mit jeweils einer identischen Durchgangsöffnung ausgestattet und werden dann aufeinandergeschichtet, so daß die einzelnen Durchgangsöffnungen quer zur Kartenebene der Karteneinheit miteinander fluchten und sich zu einer einzigen Durchgangsöffnung des Trägerkörpers ergänzen.

In einer bevorzugten Ausführungsform sind in der Kartenebene des Trägerkörpers verteilt mehrere Durchgangsöffnungen bzw. mehrere Durchgänge für jeweils ein optisch transparentes Element vorhanden.

Um das optisch transparente Element besonders materialsparend herstellen zu können, wird es in einer bevorzugten Ausführungsform mit einem etwa dem Öffnungsrand der den Trägerkörper durchsetzenden Durchgangsöffnung entsprechenden Außenquerschnitt hergestellt und in die Durchgangsöffnung des Trägerkörpers eingesetzt, insbesondere bündig eingesetzt.

Fluchten die Durchgangsöffnungen zweier Schichten, insbesondere zweier nichttransparenter Schichten, des Trägerkörpers miteinander, so wird eine fertigungstechnisch einfache Fixierung des optisch transparenten Elementes am Trägerkörper dadurch erzielt, daß mindestens eine das optisch transparente Element enthaltende Kernschicht zwischen den beiden vorgenannten Schichten des Trägerkörpers angeordnet ist. Diese Kernschicht ist z.B. transparent farbig (= Farbfilter) und/oder mit einer zusätzlichen optischen Struktur (insbesondere zur Beugung und/oder Interferenz des durch das Element hindurchtretenden Lichtes) hergestellt. Auf diese Weise wirkt die Kernschicht ohne zusätzliche Fertigungsschritte als optisch transparentes Element. Die Kernschicht kann z.B. in Form einer kostengünstig herstellbaren Folie vorliegen.

In einer vorteilhaften Ausgestaltung wird das optisch transparente Element auf eine transparente Trägerschicht des Trägerkörpers aufgebracht, z.B. aufgedruckt. Im Falle eines Aufdruckens wird das optisch transparente Element in Form einer transparenten Farbe auf die Trägerschicht des Trägerkörpers aufgedruckt. Dieses erste optisch transparente Element kann mit einem zweiten optisch transparenten Element zusammenwirken, welches auf die gegenüberliegende Oberfläche der Trägerschicht aufgebracht ist. Hierdurch können vorteilhaft auch mehrere optische Vorgänge beim Hindurchtreten des Lichtes durch den Trägerkörper kombiniert werden. Aufgrund ihrer optischen Transparenz ist für die Trägerschicht des Trägerkörpers keine zusätzliche Durchgangsöffnung erforderlich. Vielmehr bildet die Trägerschicht selbst einen optisch transparenten Durchgang des Trägerkörpers.

Damit die Transparenz der Trägerschicht nur im Bereich des Durchgangs für das optisch transparente Element wirksam ist, werden vorzugsweise die Oberflächen der Trägerschicht außerhalb des optisch transparenten Elements von einer nicht transparenten Deckschicht abgedeckt. Vorteilhaft wird diese Deckschicht in Form eines nicht transparenten Farbdruckes auf die Trägerschicht aufgedruckt. Diese Deckschicht bildet eine weitere Schicht des Trägerkörpers.

Fertigungstechnisch vorteilhaft kann das Aufdrucken des optisch transparenten Elementes und der das Element umgebenden Deckschicht in einem einzigen Druckvorgang erfolgen.

Analog können auch die Oberflächen einer das optisch transparente Element enthaltenden Kernschicht mit einem nichttransparenten Farbdruck beschichtet werden, so daß diese Beschichtungen zwei Schichten des Trägerkörpers bilden. Hierbei ist darauf zu achten, daß jede dieser beiden nichttransparenten Deckschichten des Trägerkörpers eine als Durchgang oder Durchgangsöffnung wirksame schichtfreie Zone aufweist und daß diese beiden schichtfreien Zonen in Richtung des durch die Karteneinheit hindurchtretenden Lichtes etwa gegenüberliegen, um den erforderlichen optisch transparenten Durchgang für die Karteneinheit zu bilden. Die vorgenannten nichttransparenten Drucke können beliebige Farbgebungen aufweisen und können mit beliebigen Layout-Vorgaben versehen sein.

Der Erfindungsgegenstand wird anhand der in den Figuren dargestellten Ausführungsbeispiele näher erläutert. Es zeigen:
- Fig. 1: eine Draufsicht auf die erfindungsgemäße Karteneinheit in einer ersten Ausführungsform,
- Fig. 2: die Draufsicht auf die Karteneinheit in einer zweiten Ausführungsform,
- Fig. 3-6: eine Querschnittsdarstellung der Karteneinheit in weiteren Ausführungsformen.

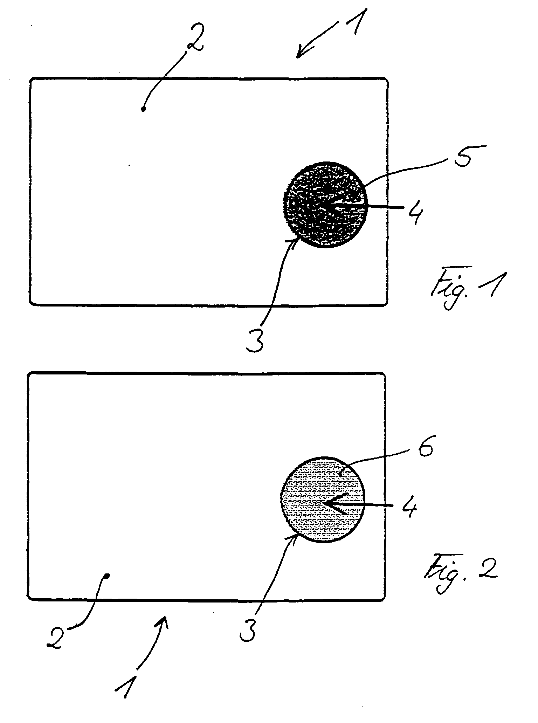

Die transportable Karteneinheit 1 gemäß Fig. 1 weist einen im Querschnitt rechteckigen Trägerkörper 2 auf. Der kartenförmige Trägerkörper 2 ist von einer kreisrunden Durchgangsöffnung 3 durchsetzt. Die Durchgangsöffnung 3 durchsetzt den Trägerkörper 2 quer zu der in Zeichenblattebene einliegenden Kartenebene der Karteneinheit 1. Die Durchgangsöffnung 3 enthält ein Element 4, welches zumindest für einen Teil des darauf auftreffenden Lichtes optisch transparent ist und als ein sogenanntes Sichtfenster der Karteneinheit 1 wirksam ist. Das Element 4 ist vorzugsweise unlösbar mit dem kartenförmigen Trägerkörper 2 verbunden. Der innerhalb der Durchgangsöffnung 3 sichtbare Teil des optisch transparenten Elements 4 ist Bestandteil einer optisch transparenten Kernschicht 5, welche zwischen zwei im einzelnen nicht dargestellten Schichten des mehrschichtigen Trägerkörpers 2 einliegt. Diese Kernschicht 5 ist als Farbfilter monochrom farblich abgetönt (z.B. rot, blau etc.). Zur Herstellung der Karteneinheit 1 sind die einzelnen, miteinander deckungsgleichen Schichten des Trägerkörpers 2 im vorgefertigten Zustand bereits mit einer Öffnung versehen. Beim Aufeinanderstapeln der einzelnen Schichten des Trägerkörpers 2 wird die Kernschicht 5 zwischen zwei Schichten des Trägerkörpers 2 eingelegt` wobei die Öffnungen sämtlicher Trägerkörper-Schichten miteinander fluchten und sich zu der Durchgangsöffnung 3 ergänzen. Die einzelnen Schichten des Trägerkörpers 2 und die Kernschicht 5 werden z.B. durch Kleben oder Laminieren miteinander verbunden.

Die in Zeichenblattebene einliegende Oberfläche des Trägerkörpers 2 trägt in einer weiteren, hier nicht dargestellten Ausführungsform Informationseinheiten, z.B. Buchstaben, Zahlen, Figuren od.gl., so daß die Oberfläche des Trägerkörpers 2 auch als Informations- oder Werbeträger wirksam ist.

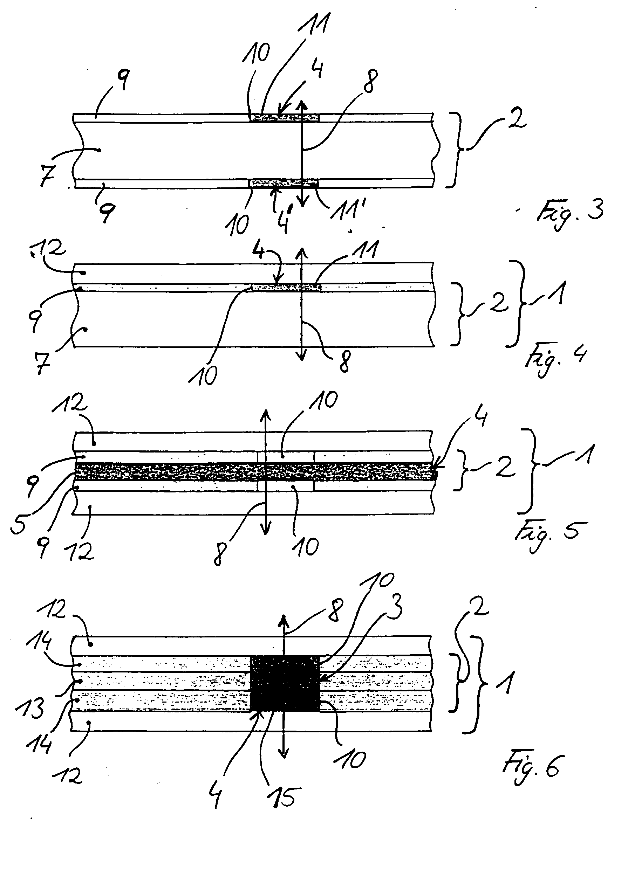

Die Karteneinheit 1 gemäß Fig. 2 unterscheidet sich von der Ausführungsform gemäß Fig. 1 im wesentlichen durch die Ausgestaltung des optisch transparenten Elementes 4. Dieses optisch transparente Element 4 ist als Beugungsgitter 6 zur Gitterinterferenz von auftreffendem Licht ausgestaltet. Dieses optisch transparente Element 4 ist in einer kreisrunden Querschnittsform vorgefertigt und wird dann bündig in die kreisrunde Durchgangsöffnung 3' des Trägerkörpers 2 eingesetzt. In einer weiteren, hier nicht dargestellten Ausführungsform ist das optisch transparente Element 4 querschnittsmäßig derart ausgestaltet, daß es mit radialem Abstand in der Durchgangsöffnung 3 einliegt.

Der Trägerkörper 2 kann nachträglich von einer durchsichtigen Außenschicht 12 umgeben, insbesondere allseitig ummantelt werden, wie anhand von Fig. 3 bis Fig. 6 noch erläutert wird. Die den Trägerkörper 2 allseitig ummantelnde Außenschicht 12 fixiert das optisch transparente Element 4 ortsfest am Trägerkörper 2. Alternativ ist das Beugungsgitter 6 Bestandteil einer zwischen zwei Trägerkörper-Schichten einzulegenden Schicht, wie dies anhand von Fig. 1 erläutert worden ist. Das Beugungsgitter 6 ist in einer ersten Ausführungsform farblos ausgebildet. In einer weiteren Ausführungsform ist das Beugungsgitter 6 farblich abgetönt und hierdurch zusätzlich als Farbfilter wirksam.

In Fig. 3 ist der Schichtenaufbau des Trägerkörpers 2 in einer weiteren Ausführungsform schematisch dargestellt. Dieser Trägerkörper 2 enthält eine optisch transparente Trägerschicht 7. Auf die beiden einander gegenüberliegenden Oberflächen dieser Trägerschicht 7 ist jeweils ein optisch transparentes Element 4 bzw. 4' aufgebracht. Die beiden optisch transparenten Elemente 4,4' fluchten in einer lotrecht zur Kartenebene des Trägerkörpers 2 angeordneten Durchgangsrichtung 8 miteinander. Dabei bildet die optisch transparente Trägerschicht 7 einen optisch transparenten Durchgang für Lichtstrahlung, welche auf das erste optisch transparente Element 4 auftrifft und zum zweiten optisch transparenten Element 4' gelangt. Der optisch transparente Durchgang weist in Durchgangsrichtung 8 eine konstante Dicke auf. Mit anderen Worten: Die geometrische Weglänge des durch den Durchgang parallel zur Durchgangsrichtung 8 hindurchtretenden Lichtes ist über die gesamte Fläche quer zur Durchgangsrichtung 8 konstant. Die Oberflächenbereiche der Trägerschicht 7 außerhalb der optisch transparenten Elemente 4,4' sind von einer nicht transparenten Deckschicht 9 abgedeckt. Diese Deckschicht 9 bildet gewissermaßen eine weitere Schicht des Trägerkörpers 2 mit einer schichtfreien Zone 10, welche in Fig. 3 von dem optisch transparenten Element 4 oder 4' ausgefüllt ist.

Während die Deckschichten 9 durch einen nichttransparenten Farbdruck realisiert sind, sind die beiden optisch transparenten Elemente 4,4' als transparente Elementenschicht 11 bzw. 11' farbig oder farblos auf die Trägerschicht 7 aufgedruckt. Gegebenenfalls enthält diese Elementenschicht 11 bzw. 11' eine zusätzliche optische Struktur, z. B. zur Beugung und/oder Interferenz des Lichtes.

Gemäß Fig. 4 enthält der Trägerkörper 2 wiederum eine transparente Trägerschicht 7. Diese Trägerschicht 7 ist im Gegensatz zur Ausführungsform gemäß Fig. 3 nur einseitig mit der nichttransparenten Deckschicht 9 und der transparenten Elementenschicht 11 bedruckt. Die nichttransparente Deckschicht 9 und die transparente Elementenschicht 11 liegen zwischen der Trägerschicht 7 und einer transparenten Außenschicht 12 ein. Diese transparente Außenschicht 12 bildet einen lichtdurchlässigen Schutzfilm oder Schutzmantel für das optisch transparente Element 4 gegen mechanische Beschädigungen oder andere äußere Einflüsse. Die transparente Außenschicht 12 ergänzt den Trägerkörper 2 zur Karteneinheit 1. In Fig. 4 ist die einen Bestandteil des Trägerkörpers 2 bildende Trägerschicht 7 aufgrund ihrer optischen Transparenz gleichzeitig als transparenter Schutzfilm wirksam, so daß auf der dem optisch transparenten Element 4 in Durchgangsrichtung 8 abgewandten Oberfläche der Trägerschicht 7 keine zusätzliche transparente Außenschicht 12 aufgebracht werden muß.

In Fig. 5 ist das optisch transparente Element 4 als optisch transparente Kernschicht 5 ausgebildet. Diese Kernschicht 5 ist an ihren beiden in Durchgangsrichtung 8 gegenüberliegenden Oberflächen jeweils mit einer nichttransparenten Deckschicht 9 abgedeckt. Diese beiden Deckschichten 9 enthalten wiederum eine schichtfreie Zone 10, welche in Durchgangsrichtung 8 miteinander fluchten und einen optisch transparenten Durchgang für das Element 4 bilden. Der die Deckschichten 9 enthaltende Trägerkörper 2 ist allseitig von der transparenten Außenschicht 12 ummantelt.

In Fig. 6 ist eine innere Trägerschicht 13 des Grundkörpers 2 in Durchgangsrichtung 8 von der Durchgangsöffnung 3 durchsetzt. In diese Durchgangsöffnung 3 ist das optisch transparente Element 4 in Form einer z. B. zylindrisch oder quaderförmig ausgebildeten Einlage 15 bündig eingesetzt. Dabei ragt die Einlage 15 in Durchgangsrichtung 8 beidseitig über die innere Trägerschicht 13 hinaus. Die beispielsweise als weiße Folie ausgebildete innere Trägerschicht 13 ist beidseitig von jeweils einer äußeren Trägerschicht 14 abgedeckt. Beide äußeren Trägerschichten 14 enthalten - analog der nichttransparenten Deckschicht 9 in Fig. 3 bis Fig. 5 - eine schichtfreie Zone 10, welche von dem optisch transparenten Element 4 ausgefüllt ist. Die äußeren Trägerschichten 14 sind insbesondere als nichttransparenter Farbdruck auf die innere Trägerschicht 13 aufgebracht. Der die innere Trägerschicht 13 und die äußeren Trägerschichten 14 enthaltende Trägerkörper 2 ist allseitig von der transparenten Außenschicht 12 ummantelt.

Es sei darauf hingewiesen, daß die in Fig. 3 - Fig. 6 dargestellten Schichtstärken einzelner Schichten des Trägerkörpers 2 bzw. der Karteneinheit 1 nicht maßstäblich sind und daß benachbarte Schichten auch ein anderes Schichtstärkenverhältnis, als in Fig. 3 - Fig. 6 dargestellt, aufweisen können.

### Bezugszeichenliste

- 1: Karteneinheit
- 2: Trägerkörper
- 3: Durchgangsöffnung
- 4,4': optisch transparentes Element
- 5: optisch transparente Kernschicht
- 6: Beugungsgitter
- 7: transparente Trägerschicht
- 8: Durchgangsrichtung
- 9: nichttransparente Deckschicht
- 10: schichtfreie Zone
- 11,11': transparente Elementenschicht
- 12: transparente Außenschicht
- 13: innere Trägerschicht
- 14: äußere Trägerschicht
- 15: Einlage

## Patentansprüche

1. Transportable Karteneinheit (1) mit einem kartenförmigen Trägerkörper (2), der einen optisch transparenten Durchgang (3,7,10) aufweist und ein am Durchgang (3,7,10) angeordnetes Element (4,4') trägt, welches zumindest für einen Teil des auftreffenden Lichtes optisch transparent ist und eine das hindurchtretende Licht beeinflussende Eigenschaft aufweist.

2. Karteneinheit nach Anspruch 1, wobei das optisch transparente Element (4,4') mindestens einen Farbfilter aufweist, insbesondere aus mindestens einem Farbfilter besteht.

3. Karteneinheit nach einem der vorhergehenden Ansprüche, wobei das optisch transparente Element (4) ein Beugungsgitter (6) zur Gitterinterferenz von auftreffendem Licht aufweist.

4. Karteneinheit nach einem der vorhergehenden Ansprüche, wobei mehrere optisch transparente Elemente (4,4') in Durchgangsrichtung (8) des optisch transparenten Durchgangs (7,10) aneinandergereiht sind.

5. Karteneinheit nach einem der vorhergehenden Ansprüche, wobei der Trägerkörper (2) aus Kunststoff besteht.

6. Karteneinheit nach einem der vorhergehenden Ansprüche, wobei der Trägerkörper (2) zumindest teilweise von einer transparenten Außenschicht (12) umgeben, insbesondere allseitig ummantelt ist.

7. Karteneinheit nach einem der vorhergehenden Ansprüche, wobei die Oberfläche des Trägerkörpers (2) und/oder der Außenschicht (12) Informationseinheiten trägt.

8. Karteneinheit nach einem der vorhergehenden Ansprüche, wobei der Trägerkörper (2) im Scheckkartenformat ausgebildet ist.

9. Karteneinheit nach einem der vorhergehenden Ansprüche, wobei der Trägerkörper (2) mehrschichtig ausgebildet ist.

10. Karteneinheit nach einem der vorhergehenden Ansprüche, wobei der Trägerkörper (2) oder mindestens eine Schicht (13) des Trägerkörpers (2) von einem Durchgang (3,10) für das optisch transparente Element (4) durchsetzt ist.

11. Karteneinheit nach Anspruch 10, wobei das optisch transparente Element (4) in den Durchgang (3) eingesetzt, insbesondere bündig eingesetzt ist.

12. Karteneinheit nach Anspruch 9 oder 10, wobei mindestens zwei Schichten (9) des Trägerkörpers (2) jeweils einen miteinander fluchtenden Durchgang (3,10) aufweisen und wobei eine das Element (4) enthaltende optisch transparente Kernschicht (5) zwischen diesen zwei Schichten (9) des Trägerkörpers (2) angeordnet ist.

13. Karteneinheit nach einem der Ansprüche 9 bis 12, wobei das optisch transparente Element (4) auf eine transparente Trägerschicht (7) des Trägerkörpers (2) aufgebracht ist.

14. Karteneinheit nach Anspruch 13, wobei die Oberfläche der transparenten Trägerschicht (7) außerhalb des optisch transparenten Elementes (4) von einer nichttransparenten Deckschicht (9) abgedeckt ist.

15. Karteneinheit nach einem der Ansprüche 9 bis 14, wobei mindestens eine Schicht (9,14) des Trägerkörpers (2) durch einen nichttransparenten Farbdruck hergestellt ist.

16. Karteneinheit nach einem der Ansprüche 13 bis 15, wobei das optisch transparente Element (4,4') auf die transparente Trägerschicht (7) aufgedruckt ist.
